# EUROPÄISCHE PATENTSCHRIFT

(11) **EP 3 325 170 B1**
(45) Veröffentlichungstag und Bekanntmachung des Hinweises auf die Patenterteilung: **08.09.2021**
(21) Anmeldenummer: 16757141.3
(22) Anmeldetag: 14.07.2016
(51) Int. Cl.: B05B 7/06, B05B 7/08, B05B 7/12, B05B 12/08, B21D 37/16, B21D 37/18, B21K 29/00, B30B 15/00, B05B 1/30, B29C 37/00

(54) **SPRÜHKOPF ZUR KÜHLSCHMIERUNG MINDESTENS EINES GESENKS EINER UMFORMMASCHINE SOWIE VERFAHREN ZUR HERSTELLUNG EINES SOLCHEN SPRÜHKOPFS**
SPRAY HEAD FOR SUPPLING AT LEAST ONE DIE OF A FORMING MACHINE WITH LUBRICATING COOLANT, AND METHOD FOR PRODUCING SUCH A SPRAY HEAD
TÊTE DE PULVÉRISATION POUR LA LUBRIFICATION DE REFROIDISSEMENT D'AU MOINS UNE MATRICE D'UNE MACHINE DE FORMAGE ET PROCÉDÉ DE FABRICATION DE CETTE TÊTE DE PULVÉRISATION

(30) Priorität: 17.07.2015 DE 102015111685
(43) Veröffentlichungstag der Anmeldung: 30.05.2018
(73) Patentinhaber: SMS Group GmbH, 40237 Düsseldorf (DE)
(72) Erfinder: ROSSBACH, Axel, 41069 Mönchengladbach (DE); SCHAPRIAN, Markus, 41069 Mönchengladbach (DE); GOBER, Norbert, 41069 Mönchengladbach (DE); KOCH, Thomas, 41069 Mönchengladbach (DE); PLOTNIKOV, Olga, 41069 Mönchengladbach (DE); HEINZEL, Christoph, 41069 Mönchengladbach (DE)
(74) Vertreter: Reuther, Martin
(86) Internationale Anmeldenummer: PCT/DE2016/100316
(87) Internationale Veröffentlichungsnummer: WO 2017/012609

(56) Entgegenhaltungen:
- EP-A1- 1 637 252
- CN-A- 102 513 480
- DE-A1- 2 526 900
- DE-A1- 3 039 914
- DE-A1- 19 511 272
- DE-A1-102008 047 118
- DE-C1- 3 640 818
- DE-C1- 3 709 666
- JP-A- 2015 033 723
- US-A- 4 758 142
- US-B2- 8 524 312

## Beschreibung

Die Erfindung betrifft einen Sprühkopf zur Kühlschmierung mindestens eines Gesenks einer ein Untergesenk und ein Obergesenk aufweisenden Umformmaschine, insbesondere einer Gesenkschmiedepresse, der zwischen zwei Arbeitshüben in einen Arbeitsraum zwischen Unter- und Obergesenk eingebracht wird und wenigstens eine Zweistoffdüse trägt, die zur Kühlschmierung ein Gemisch von Sprühmittel und Sprühluft auf das Gesenk zerstäubt und mit wenigstens einem Zuführkanal verbunden ist, über welche ein Steuerfluid, das Gemisch, Sprühmittel oder Sprühluft der Zweistoffdüse zugeführt werden kann und der bis zu einem Sprühkopffuß reicht, der einen Versorgungsanschluss trägt, welcher mit dem Zuführkanal verbunden ist. Ebenso betrifft die Erfindung ein Verfahren zur Herstellung eines derartigen Sprühkopfs.

Derartige Sprühköpfe sind beispielsweise aus der DE 10 2006 004 107 B1 oder auch aus der DE 195 11 272 A1 bekannt. Hierbei sind die Sprühköpfe im Wesentlichen aus einer mehrschichtigen Plattenanordnung aufgebaut, durch welche getrennte Zuführkanäle für das Sprühmittel und die Sprühluft sowie auch entsprechende Ventile, insbesondere Membranenventile und Zuführkanäle für Steuerfluid, mittels dessen die Membranventile angesteuert werden können, bereitgestellt werden. Die plattenartigen Sprühköpfe bauen zwar verhältnismäßig schmal, sodass sie auch in kleinere Freiräume zwischen den Gesenken gelangen können. Die Variabilität des Einsatzes dieser Sprühköpfe hält sich jedoch in Grenzen. Auch sind Sprühköpfe in der US 4,758,142 A, der DE 10 2008 047118 A1, der DE 25 26 900 A1, der CN 102 513 480 A, der JP 2015 033723 A, der DE 36 40 818 C1, der EP 1 637 252 A1, der DE 37 09 666 C1 und in der DE 30 39 914 A1 beschrieben.

Es ist Aufgabe der vorliegenden Erfindung, gattungsgemäße Sprühköpfe bereit zu stellen, welche einen variableren Einsatz ermöglichen.

Die Aufgabe der Erfindung wird durch einen Sprühkopf sowie ein Verfahren zur Herstellung eines Sprühkopfs mit den Merkmalen der unabhängigen Ansprüche gelöst. Weitere, ggf. auch unabhängig hiervon, vorteilhafte Ausgestaltungen finden sich in den Unteransprüchen sowie der nachfolgenden Beschreibung.

So kann sich ein Sprühkopf zur Kühlschmierung mindestens eines Gesenks einer ein Untergesenk und ein Obergesenk aufweisenden Umformmaschine, insbesondere einer Gesenkschmiedepresse, der zwischen zwei Arbeitshüben in einen Arbeitsraum zwischen Unter- und Obergesenk eingebracht wird und wenigstens eine Zweistoffdüse trägt, die zur Kühlschmierung ein Gemisch aus Sprühmittel und Sprühluft auf das Gesenk zerstäubt und mit wenigstens einem Zuführkanal verbunden ist, über welchen ein Steuerfluid, das Gemisch, Sprühmittel oder Sprühluft der Zweistoffdüse zugeführt werden kann und der bis zu einem Sprühkopffuß reicht, der einen Versorgungsanschluss trägt, welcher mit dem Zuführkanal verbunden ist, dadurch auszeichnen, dass die Zweistoffdüse einen einstückig ausgebildeten Düsenkörper aufweist und bis auf bewegliche Baugruppen, wie beispielsweise etwaige Ventildeckel oder Ventilmembranen, einstückig ausgebildet ist.

Der einstückig ausgebildete Düsenkörper bzw. die einstückig ausgebildete Zweistoffdüse ermöglichen insbesondere einen Verzicht auf etwaige Dichtungen sowie einen sehr kompakten Aufbau der Zweistoffdüse, der damit auch die Vielseitigkeit im Einsatz erhöht, da die Zweistoffdüse verhältnismäßig klein baut und dennoch individuell ansteuerbar ausgebildet werden kann.

Auch kann sich ein Sprühkopf zur Kühlschmierung mindestens eines Gesenks einer ein Untergesenk und ein Obergesenk aufweisenden Umformmaschine, insbesondere einer Gesenkschmiedepresse, der zwischen zwei Arbeitshüben in einen Arbeitsraum zwischen Unter- und Obergesenk eingebracht wird und wenigstens eine Zweistoffdüse trägt, die zur Kühlschmierung ein Gemisch aus Sprühmittel und Sprühluft auf das Gesenk zerstäubt und mit wenigstens einem Zuführkanal verbunden ist, über welchen ein Steuerfluid, das Gemisch, Sprühmittel oder Sprühluft der Zweistoffdüse zugeführt werden kann und der bis zu einem Sprühkopffuß reicht, der einen Versorgungsanschluss trägt, welcher mit dem Zuführkanal verbunden ist, dadurch auszeichnen, dass der Düsenkörper der Zweikopfdüse und eine Kanalwandung des Zufuhrkanals einstückig miteinander ausgebildet sind.

Eine derartige Ausgestaltung ermöglicht ebenfalls den Verzicht auf etwaige Dichtungen in der Verbindung zwischen der Zweistoffdüse und der Kanalwandung des Zufuhrkanals, sodass die Anordnung hier entsprechend platzsparend baut und mithin eine individuelle Ausgestaltung des Sprühkopfs möglich ist, welche diesen wiederum vielseitig anwendbar belässt.

Ebenso kann sich ein Sprühkopf zur Kühlschmierung mindestens eines Gesenks einer ein Untergesenk und ein Obergesenk aufweisenden Umformmaschine, insbesondere einer Gesenkschmiedepresse, der zwischen zwei Arbeitshüben in einen Arbeitsraum zwischen Unter- und Obergesenk eingebracht wird und wenigstens eine Zweistoffdüse trägt, die zur Kühlschmierung ein Gemisch aus Sprühmittel und Sprühluft auf das Gesenk zerstäubt und mit wenigstens einem Zuführkanal verbunden ist, über welchen ein Steuerfluid, das Gemisch, Sprühmittel oder Sprühluft der Zweistoffdüse zugeführt werden kann und der bis zu einem Sprühkopffuß reicht, der einen Versorgungsanschluss trägt, welcher mit dem Zuführkanal verbunden ist, dadurch auszeichnen, dass die Kanalwandung des Zuführkanals und des Sprühkopffußes einstückig miteinander ausgebildet sind.

Auch dieses ermöglicht eine kompakte Ausgestaltung des Sprühkopfs, was entsprechend dann eine Vielseitigkeit in dessen Einsatz bedingt.

Dementsprechend bedingt die Einstückigkeit der vorstehend erläuterten Baugruppen jeweils einen kompakten Aufbau, der insbesondere auf Dichtung verzichtet und durch seine Kompaktheit die Vielseitigkeit erhöht. Insbesondere ist es beispielsweise möglich, sehr viele einzelne Düsen, die bei der Ausgestaltung auch noch einzeln ansteuerbar sind, in dem Sprühkopf vorzusehen, sodass ein jeweiliges Gesenk sehr individuell mit einer Kühlschmierung versehen werden kann, wobei - ggf. - bei einem Gesenkwechsel durch eine andere Ansteuerung der einzelnen Sprühkopfdüsen eine entsprechend angepasste Kühlschmierung erfolgen kann.

Im Lichte dieses Vorteils ergibt sich, dass insbesondere sowohl der Düsenkörper, die Kanalwandung des Zuführkanals als auch des Sprühkopffuß einstückig miteinander ausgebildet sein können, wodurch sich der entsprechende Vorteil noch darüber hinausgehend zeigt.

Hierbei versteht es sich, dass etwaige Ventildeckel oder Ventilmembranen oder sonstige Baugruppen der Zweistoffdüse nicht zwingend mit derselben einstückig ausgebildet sein müssen, was jedoch - beispielsweise - bei Membranen, welche durch entsprechend dünn ausgebildete Stellen des Material des Düsenkörpers bereit gestellt werden können, durchaus denkbar ist.

Vorzugsweise ist ein extra vorgesehenen Gehäuse ebenfalls einstückig mit dem Düsenkörper, der Kanalwandung des Zuführkanals und/oder dem Sprühkopffuß ausgebildet, was dadurch, dass das Gehäuse dann ergänzend stabilisierend hinsichtlich der einzelnen Baugruppen des Sprühkopfes wirken kann, ebenfalls die Möglichkeit belässt, die einzelnen Baugruppen des Sprühkopfes kompakter auszugestalten, mit den bereits vorgenannten Vorteilen.

Darüber hinaus kann sich ein Sprühkopf zur Kühlschmierung mindestens eines Gesenks einer ein Untergesenk und ein Obergesenk aufweisenden Umformmaschine, insbesondere einer Gesenkschmiedepresse, der zwischen zwei Arbeitshüben in einen Arbeitsraum zwischen Unter- und Obergesenk eingebracht wird und wenigstens eine Zweistoffdüse trägt, die zur Kühlschmierung ein Gemisch aus Sprühmittel und Sprühluft auf das Gesenk zerstäubt und mit wenigstens einem Zuführkanal verbunden ist, über welchen ein Steuerfluid, das Gemisch, Sprühmittel oder Sprühluft der Zweistoffdüse zugeführt werden kann und der bis zu einem Sprühkopffuß reicht, der einen Versorgungsanschluss trägt, welcher mit dem Zuführkanal verbunden ist, dadurch auszeichnen, dass die Zweistoffdüse eine Lavaldüse umfasst.

Durch die Ausgestaltung als Lavaldüse wird eine besonders intensive Zerstäubung des Gemisches aus Sprühmittel und Sprühluft gewährleistet und dieses auch bei verhältnismäßig kleinen Zweistoffdüsen. Dieses ergibt, wie bereits vorstehend erläutert, eine besonders bevorzugte Möglichkeit, den Sprühkopf sehr kompakt auszugestalten und hierdurch viele Zweistoffdüsen mit der hiermit verbundenen individuellen Möglichkeiten ein Gesenk zu besprühen, vorzusehen.

Hierbei ist es insbesondere vorteilhaft, wenn die Zweistoffdüse einen Sprühluftausgang aufweist, der als Lavaldüse ausgebildet ist. Dieses lässt sich strömungsmechanisch verhältnismäßig gut beherrschen und baulich auch einfach umsetzen, insbesondere wenn der Sprühluftausgang einen Sprühmittelausgang umgibt. Die durch die Lavaldüse auf extrem hohe Geschwindigkeiten beschleunigte Sprühluft kann dann insbesondere auch auf Grund der durch die Lavaldüse bedingten starken Verwirbelungen besonders gut Sprühmittel mitnehmen und zerstäuben. Mithin lässt sich mit besonders kleinen Zweistoffdüsen ein hervorragendes Sprühbild erzeugen, welches dementsprechend eine Individualisierung des Sprühbilds in Abhängigkeit von dem jeweiligen Gesenk, welches mit einer Kühlschmierung versehen werden soll, angepasst werden kann.

Darüber hinaus kann sich ein Sprühkopf zur Kühlschmierung mindestens eines Gesenks einer ein Untergesenk und ein Obergesenk aufweisenden Umformmaschine, insbesondere einer Gesenkschmiedepresse, der zwischen zwei Arbeitshüben in einen Arbeitsraum zwischen Unter- und Obergesenk eingebracht wird und wenigstens eine Zweistoffdüse trägt, die zur Kühlschmierung ein Gemisch aus Sprühmittel und Sprühluft auf das Gesenk zerstäubt und mit wenigstens einem Zuführkanal verbunden ist, über welchen ein Steuerfluid, das Gemisch, Sprühmittel oder Sprühluft der Zweistoffdüse zugeführt werden kann und der bis zu einem Sprühkopffuß reicht, der einen Versorgungsanschluss trägt, welcher mit dem Zuführkanal verbunden ist, dadurch auszeichnen, dass eine Kanalwandung des Zufuhrkanals als Rohr ausgebildet ist.

Ein Rohr ermöglicht hervorragende hydrodynamische Eigenschaften, wenn ein Fluid, sei es ein Gemisch, das Sprühmittel, die Sprühluft oder eine Steuerfluid, zu der Zweistoffdüse zugeführt werden soll, sodass der entsprechende Kanal mit einem minimalen Querschnitt bei maximalen Wirkungsgraden bereit gestellt werden kann. Insbesondere lässt sich ein Rohr auch unmittelbar und direkt verlegen, sodass etwaig scharfe Abbiegungen oder ähnliches auf ein Minimum reduziert werden können. Dieses ermöglicht es insgesamt, den Sprühkopf wesentlich kompakter auszugestalten, da für das Rohr aufgrund seines geringeren Querschnitts wenig Bauraum benötigt wird. Dieses ermöglicht erhöht wiederum die Freiheit für eine individuelle Anpassung des Sprühkopfs bzw. für die Unterbringung einer möglichst großen Zahl an Zweistoffdüsen in dem Sprühkopf.

Vorzugsweise ist das Rohr eigensteif ausgebildet und kann sich selbst sowie die Zweistoffdüse tragen. Hierdurch kann auf weitere tragende Baugruppen im Wesentlichen verzichtet werden, wobei - ggf. - ein ergänzendes Gehäuse vorgesehen sein kann, welches ggf. ergänzend tragend wirksam sein kann. Nichtsdestotrotz ist es von Vorteil, wenn sich das Rohr selbst sowie die Zweistoffdüse im Wesentlichen tragen kann und das Gehäuse hier lediglich unterstützend wirkt. Dieses bedingt, dass das Gehäuse verhältnismäßig leicht ausgebildet werden kann, was dementsprechend wieder einen Gewinn an Bauraum bringt.

Es versteht sich, dass die Zweistoffdüse mit mehreren Zuführkanälen verbunden sein kann, die entsprechend der vorstehen beschriebenen Vorgaben ausgebildet sein können. Hierdurch lassen sich insbesondere verschiedene Fluide, wie beispielsweise das Steuerfluid, Sprühmittel bzw. Sprühluft der Zweistoffdüse durch getrennte Zuführkanäle zuführen. Ggf. kann diesbezüglich auch eine Abfuhr vorgesehen sein, wenn beispielsweise das Sprühmittel im Kreis geführt werden soll, um etwaigen Entmischungsvorgängen entgegen zu wirken. Hierbei versteht es sich, dass, wenn mehrere Zuführkanäle mit einer Zweistoffdüse verbunden sind, es ausreicht, wenn die Zuführkanäle jeweils als Rohr ausgebildet sind und gemeinsam die Zweistoffdüse tragen können. Hier ist letztlich eine Abwägung der für die Eigensteifigkeit notwendigen Masse und der Freiheit hinsichtlich der individuellen Gestaltungsmöglichkeit zu treffen.

Ggf. ist es auch möglich, dass der Sprühkopf wenigstens zwei mit jeweils wenigstens einem Zuführkanal verbundenen Zweistoffdüsen trägt. Insbesondere kann natürlich eine Vielzahl von Zweistoffdüsen vorgesehen sein, die jeweils mit wenigstens einem Zuführkanal verbunden sind, wobei es auch denkbar ist, dass die Zweistoffdüsen jeweils in verschiedene Richtungen beispielsweise nach oben und nach unten, weisen. Ebenso können die Zweistoffdüsen selbstverständlich auch mit gegenüber der Vertikalen geneigten Winkeln vorgesehen sein.

Andererseits ist es auch denkbar, mehrere Zweistoffdüsen über einen gemeinsamen Zuführkanal mit einem Fluid, beispielsweise mit Sprühmittel oder Sprühluft, zu versorgen. Dieses ist insbesondere dann denkbar, wenn jede der Düsen separat angesteuert werden kann, beispielsweise durch einen separaten Steuerfluidzufuhrkanal, sodass die Zahl der Zuführkanäle auf ein Minimum beschränkt werden kann, was dementsprechend wiederum Bauraum zur Verfügung stellt.

Zwischen den Zweistoffdüsen und den Zuführkanälen kann freier Raum vorgesehen sein, was einerseits das Gesamtgewicht reduziert, sodass der Sprühkopf schneller in den Arbeitsraum gebracht und auch von diesem wieder entfernt werden kann. Darüber hinaus ermöglicht der freie Raum, dass etwaige Flüssigkeitsbestandteile, welche in dem Arbeitsraum umherfliegen und sich an dem Sprühkopf anlagern bzw. drohen, sich an diesem anzulagern, durch den freien Raum hindurch gelangen bzw. an den Wandungen, welche den freien Raum umgeben, herabfließen können. Hierdurch lässt sich vermeiden, dass sich Flüssigkeiten an der Oberseite des Sprühkopfes anreichern, welche möglicherweise zu unkontrollierten Effekten an der Umformmaschine führen, wenn diese dann beispielsweise weggeschleudert werden.

Hierbei bilden die Unterseiten der jeweiligen Baugruppen des Sprühkopfes, welche den freien Raum umgeben, naturgemäß Tropfstellen, an denen etwaige Flüssigkeit abtropfen kann. Bei geeigneter Ausgestaltung des Sprühkopfes lässt sich gewährleisten, dass eine Vielzahl derartiger Tropfstellen vorliegt, sodass große Flüssigkeitsansammlungen, die zu Ablagerungen des Sprühmittels auf dem Gesenk oder aber auch auf Werkstücken, die in der Umformmaschine bearbeitet werden sollen, führen könnten, vermieden werden können.

Diese Effekte können insbesondere bei den aus dem Stand der Technik bekannten plattenartigen Sprühköpfen beobachtet werden, bei denen es durch große Ansammlungen von Fluid an den Sprühkopf zu unkontrollierten Verteilungen und Ablagerungen von Fluiden, insbesondere von Sprühmittel oder Wasser, kommt.

Dementsprechend kann sich ein Sprühkopf zur Kühlschmierung mindestens eines Gesenks einer ein Untergesenk und ein Obergesenk aufweisenden Umformmaschine, insbesondere einer Gesenkschmiedepresse, der zwischen zwei Arbeitshüben in einen Arbeitsraum zwischen Unter- und Obergesenk eingebracht wird und wenigstens eine Zweistoffdüse trägt, die zur Kühlschmierung ein Gemisch aus Sprühmittel und Sprühluft auf das Gesenk zerstäubt und mit wenigstens einem Zuführkanal verbunden ist, über welchen ein Steuerfluid, das Gemisch, Sprühmittel oder Sprühluft der Zweistoffdüse zugeführt werden kann und der bis zu einem Sprühkopffuß reicht, der einen Versorgungsanschluss trägt, welcher mit dem Zuführkanal verbunden ist, dadurch auszeichnen, dass der Sprühkopf eine Oberseite und eine Unterseite aufweist und an der Unterseite in wenigstens einem Bereich neben der Zweistoffdüse Tropfstellen vorgesehen sind.

In der Nähe der Zweistoffdüse wird auf Grund des Düseneffekts, insbesondere wenn beispielsweise Lavaldüsen zur Anwendung kommen, das Problem der Ansammlung von Flüssigkeit wenig auftreten. In Bereichen neben der Zweistoffdüse kann dieses an ebenen Stellen jedoch vorkommen. Durch Tropfstellen, wie beispielsweise geeignet ausgebildete Vorsprünge oder aber die Unterseite von Rohren und ähnliches naturgemäß beistellen, können sich eine Vielzahl an kleine Tropfen jeweils über die Unterseite des Sprühkopfes ansammeln und, ohne dass sie zu großen Tropfen akkumulieren, abtropfen. Derartige kleine Tropfen sind an sich im normalen Verfahrensablauf tolerierbar.

Es ist insbesondere denkbar, derartige Tropfstellen durch definiert bereitgestellte Vorsprünge oder Kanten an der Unterseite des Sprühkopfes vorzusehen. Dieses können insbesondere beispielsweise die Ränder von sich öffnenden Poren oder Waben sein.

Vorzugsweise reichen von der Oberseite zu der Unterseite durch den Sprühkopf hindurch Tropfflussöffnungen, durch welche Flüssigkeit von der Oberseite zu der Unterseite gelangt. Hierdurch können größere, sich ansammelnde Flüssigkeitsmengen auf der Oberseite des Sprühkopfs vermieden werden, was dementsprechende Vorteile bringt. Hierbei versteht es sich, dass derartige Tropfflussöffnungen ggf. auch unabhängig von den übrigen Merkmalen vorliegender Erfindung bei einem gattungsgemäßen Sprühkopf vorteilhaft sein können.

Vorzugsweise enden die Tropfflussöffnungen an Tropfstellen, sodass nicht nur eine gezielte Leitung der Flüssigkeit von der Oberseite zur Unterseite sondern auch ein gezieltes Abtropfen gewährleistet ist.

Auch kann sich ein Sprühkopf zur Kühlschmierung mindestens eines Gesenks einer ein Untergesenk und ein Obergesenk aufweisenden Umformmaschine, insbesondere einer Gesenkschmiedepresse, der zwischen zwei Arbeitshüben in einen Arbeitsraum zwischen Unter- und Obergesenk eingebracht wird und wenigstens eine Zweistoffdüse trägt, die zur Kühlschmierung ein Gemisch aus Sprühmittel und Sprühluft auf das Gesenk zerstäubt und mit wenigstens einem Zuführkanal verbunden ist, über welchen ein Steuerfluid, das Gemisch, Sprühmittel oder Sprühluft der Zweistoffdüse zugeführt werden kann und der bis zu einem Sprühkopffuß reicht, der einen Versorgungsanschluss trägt, welcher mit dem Zuführkanal verbunden ist, dadurch auszeichnen, dass der Sprühkopf ein poröses Gehäuse aufweist.

Abgesehen davon, dass die Porosität an sich mit einer Gewichtsersparnis einher geht, welche den Sprühkopf leichter und mithin einfacher und schneller beweglich belässt, sodass er vielseitiger einsetzbar ist, ermöglicht das poröse Gehäuse naturgemäß, dass Tropfstellen und -je nach konkreter Ausgestaltung der Porosität - auch Tropfflussöffnungen vorliegen. Insofern ist es von Vorteil, wenn der Sprühkopf eine Oberseite und eine Unterseite aufweist und die Poren des Gehäuses sich an der Oberseite und/oder an der Unterseite öffnen.

Baulich einfach lassen sich Poren bereitstellen, wenn diese regelmäßig angeordnet sind, da regelmäßige Anordnungen maschinenbaulich einfacher vorzubereiten und vorzusehen sind.

Wie bereits vorstehend dargelegt, ist es von Vorteil, wenn die Poren zumindest teilweise von der Oberseite zur Unterseite reichen, wobei die hierdurch ausgebildeten Tropfflussöffnungen je nach konkreter Umsetzung geradlinig das Gehäuse durchdringen können oder aber in unregelmäßigen Wegen, was letztlich von der konkreten Ausgestaltung der Poren gegeben ist. Insbesondere ist es beispielsweise auch denkbar, dass das Gehäuse lediglich dünne Wandungen mit entsprechenden Poren oder Löchern aufweist und nach innen hin hohl ist, sodass Flüssigkeit einfach durch das Innere des Gehäuses hindurch dringen kann.

Insbesondere können die Poren Waben umfassen, da Waben bekanntermaßen bei besonders geringem Materialeinsatz und Gewicht äußerst stabil und dennoch ausreichend offen sind, um als Tropfflussöffnungen dienen zu können, wenn sie von der Oberseite zur Unterseite des Gehäuses reichen. Andererseits können die Kanten der Waben sehr gut regelmäßig über die Gehäuseunterseite verteilt Tropfstellen bilden.

Wie bereits vorstehend dargelegt ist es von Vorteil, wenn wenigstens eine der Poren von der Oberseite bis zur Unterseite durchdringt, sodass hierdurch eine Tropfflussöffnung bereitgestellt ist. Vorzugweise durchdringen das Gehäuse von der Oberseite zur Unterseite wenigstens einige der Poren, wobei die entsprechende Zahl der Poren von dem Maß abhängt, mit dem Flüssigkeit von der Oberseite des Gehäuses zur Unterseite geführt werden soll. Hierbei versteht es ich, dass - wenn beispielsweise Waben von der Oberseite bis zur Unterseite reichen, diese Waben jedoch an inneren Strukturen, wie beispielsweise an Rohren oder an Düsenkörpern angrenzen - ggf. kleine Öffnungen zwischen den Waben und den inneren Strukturen vorgesehen sein können, um einen sicheren Durchfluss von Flüssigkeit zu gewährleisten.

Es versteht sich, dass die Poren bzw. Waben ohne weiteres als Gehäusebestandteile auch einstückig mit den Zuführkanälen bzw. deren Wandungen, den Düsenkörpern oder auch dem Sprühkopffuß ausgebildet sein können.

Ein Sprühkopf zur Kühlschmierung mindestens eines Gesenks einer ein Untergesenk und ein Obergesenk aufweisenden Umformmaschine, insbesondere einer Gesenkschmiedepresse, der zwischen zwei Arbeitshüben in einen Arbeitsraum zwischen Unter- und Obergesenk eingebracht wird und wenigstens eine Zweistoffdüse trägt, die zur Kühlschmierung ein Gemisch aus Sprühmittel und Sprühluft auf das Gesenk zerstäubt und mit wenigstens einem Zuführkanal verbunden ist, über welchen ein Steuerfluid, das Gemisch, Sprühmittel oder Sprühluft der Zweistoffdüse zugeführt werden kann und der bis zu einem Sprühkopffuß reicht, der einen Versorgungsanschluss trägt, welcher mit dem Zuführkanal verbunden ist, und sich dadurch auszeichnet, dass der Sprühkopf ergänzend zu der Zweistoffdüse wenigstens eine Nebeldüse trägt, ist besonders vielseitig insbesondere auch bei hohen Temperaturen einsetzbar, da über diese Nebeldüsen eine zusätzliche Kühlung des Sprühkopfes erzielt werden kann, was insbesondere während Wartungsphasen oder zum Beispiel bei Störfällen von Vorteil ist, damit der Sprühkopf nicht überhitzt. Dieses ermöglicht es insbesondere auch Materialien für den Sprühkopf zu nutzen, die etwas weniger thermisch stabil sind, was dementsprechend den Sprühkopf wiederum vielseitiger einsetzbar belässt. Insbesondere sind häufig derartige Materialien, also Materialien, die etwas weniger thermisch stabil sind, leichter und filigraner zu verarbeiten, sodass insgesamt auch ein flexibler einsetzbarer Sprühkopf hergestellt werden kann.

Als Nebeldüse kann jede Art von Düse genutzt werden, die geeignet ist, ein Kühlmittel ergänzend auszugeben und zu vernebeln, zu zerstäuben oder zu verdampfen, um auf diese Weise dem Sprühkopf selbst zu kühlen.

Vorzugsweise ist die Nebeldüse auf Baugruppen des Sprühkopfs oder nach oben gerichtet, sodass eine entsprechende Kühlung des Sprühkopfs gewährleistet ist. Letzteres geschieht beispielsweise dadurch, dass eine aus der Nebeldüse kommende Flüssigkeit, die nach oben abgegeben wird, gravitationsbedingt auf den Sprühkopf zurück sinkt und diesen hierdurch kühlt.

Insbesondere ist es jedoch von Vorteil, wenn die Nebeldüse auf einem Düsenkörper der Zweistoffdüse, auf eine Kanalwandung des Zuführkanals, auf den Sprühkopffuß und/oder auf das Gehäuse gerichtet ist, da hierdurch eine besonders geeignete Kühlung gewährleistet werden kann. Insbesondere kann natürlich eine entsprechende Nebeldüse auch im Inneren des Gehäuses wirksam werden, was insbesondere im Zusammenspiel mit den Tropfflussöffnungen und den Tropfstellen unkritisch ist, da sich dann im inneren des Gehäuses keine Flüssigkeit ansammeln kann.

Vorzugsweise vernebelt die Nebeldüse Wasser, was in der Regel von der Verfahrensführung besonders unkritisch ist und für hervorragende Kühlung sorgt.

Ein besonders vielseitig einsetzbarer Sprühkopf zur Kühlschmierung mindestens eines Gesenks einer ein Untergesenk und ein Obergesenk aufweisenden Umformmaschine, insbesondere einer Gesenkschmiedepresse, der zwischen zwei Arbeitshüben in einen Arbeitsraum zwischen Unter- und Obergesenk eingebracht wird und wenigstens eine Zweistoffdüse trägt, die zur Kühlschmierung ein Gemisch aus Sprühmittel und Sprühluft auf das Gesenk zerstäubt und mit wenigstens einem Zuführkanal verbunden ist, über welchen ein Steuerfluid, das Gemisch, Sprühmittel oder Sprühluft der Zweistoffdüse zugeführt werden kann und der bis zu einem Sprühkopffuß reicht, der einen Versorgungsanschluss trägt, welcher mit dem Zuführkanal verbunden ist, lässt sich herstellen, wenn sich das Herstellungsverfahren dadurch auszeichnet, dass Baugruppen des Sprühkopfs, wie beispielsweise ein Düsenkörper der Zweistoffdüse, eine Kanalwandung des Zuführkanals oder der Sprühkopffuß bzw. ein Gehäuse, mittels 3D-Druck hergestellt werden.

Diese Herstellungsmethode ermöglicht es baulich besonders einfach einstückige bzw. monolithische Baugruppen bereitzustellen, die zudem äußerst filigran und individuell angepasst sind. Dieses gilt insbesondere beispielweise für die Ausgestaltung eines Düsenkörpers, beispielsweise als Lavaldüse, oder auch für eine sehr enge und ineinander verschlungene Führung von Zuführkanälen oder von Rohren, die diese Zuführkanäle bilden. Hierbei lassen sich insbesondere strömungsmechanische Optimierungen einfach und zielgerichtet umsetzen, wobei - angesichts der verhältnismäßig geringen Stückzahlen, mit denen derartige Sprühköpfe für Umformmaschinen bereitgestellt werden müssen - der 3D-Druck insbesondere auch aufgrund seiner sehr hohen Individualisierbarkeit verhältnismäßig kostengünstig ist.

Vorzugweise druckt der 3D-Druck metallisch, sodass sich verhältnismäßig thermisch stabile Sprühköpfe hierdurch herstellen lassen. Aufgrund der vorstehend beschriebenen Maßnahmen, insbesondere aufgrund der Kühlung, können jedoch auch Metalle verwendet werden, die verhältnismäßig wärmeempfindlich sind, was dementsprechende Vorteile bzw. Erleichterungen bei der Herstellung bringt, da für die Herstellung nicht entsprechend hohe Temperaturen bereitgestellt werden müssen.

Es versteht sich, dass ggf. der 3D-Druck auch Kunststoffe drucken kann, wenn diese Kunststoffe ausreichend thermisch stabil sind bzw. eine ausreichende Kühlung, insbesondere für den Fall von Störfällen oder bei Wartungsarbeiten, vorhanden ist.

Weitere Vorteile, Ziele und Eigenschaften vorliegender Erfindung werden anhand nachfolgender Beschreibung von Ausführungsbeispielen erläutert, die insbesondere auch in anliegender Zeichnung dargestellt sind. In der Zeichnung zeigen:
- Figur 1: eine schematische Seitenansicht einer als Gesenkschmiedepresse ausgebildeten Umformmaschine mit einem an einem Sprüharm befindlichen Sprühkopf;
- Figur 2: dem Sprühkopf nach Figur 1 in schematischer Ansicht von unten;
- Figur 3: den Sprühkopf nach Figuren 1 und 2 in einer Seitenansicht;
- Figur 4: den Sprühkopf nach Figuren 1 bis 3 in einer Ansicht von vorne;
- Figur 5: den Sprühkopf nach Figuren 1 bis 4 in einer Aufsicht;
- Figur 6: den Sprühkopf nach Figuren 1 bis 5 in einer perspektivischen, teilweise durchsichtigen Ansicht;
- Figur 7: eine schematische Schnittdarstellung durch eine Zweistoffdüse nach Figuren 1 bis 6;
- Figur 8: einen zweiten Sprühkopf in ähnlicher Darstellung wie Figur 2;
- Figur 9: den Sprühkopf nach Figur 8 in ähnlicher Darstellung wie Figur 3
- Figur 10: den Sprühkopf nach Figuren 8 und 9 in ähnlicher Darstellung wie Figur 5;
- Figur 11: einen dritten Sprühkopf in ähnlicher Darstellung wie Figuren 2 und 8;
- Figur 12: den Sprühkopf nach Figur 11 in ähnlicher Darstellung wie Figuren 3 und 9;
- Figur 13: den Sprühkopf nach Figuren 11 und 12 in ähnlicher Darstellung wie Figuren 5 und 10;
- Figur 14: einen vierten Sprühkopf in ähnlicher Darstellung wie Figuren 2, 8 und 11;
- Figur 15: den Sprühkopf nach Figur 14 in ähnlicher Darstellung wie Figuren 3, 9 und 12; und
- Figur 16: den Sprühkopf nach Figuren 14 und 15 in ähnlicher Darstellung wie Figuren 5, 10 und 13.

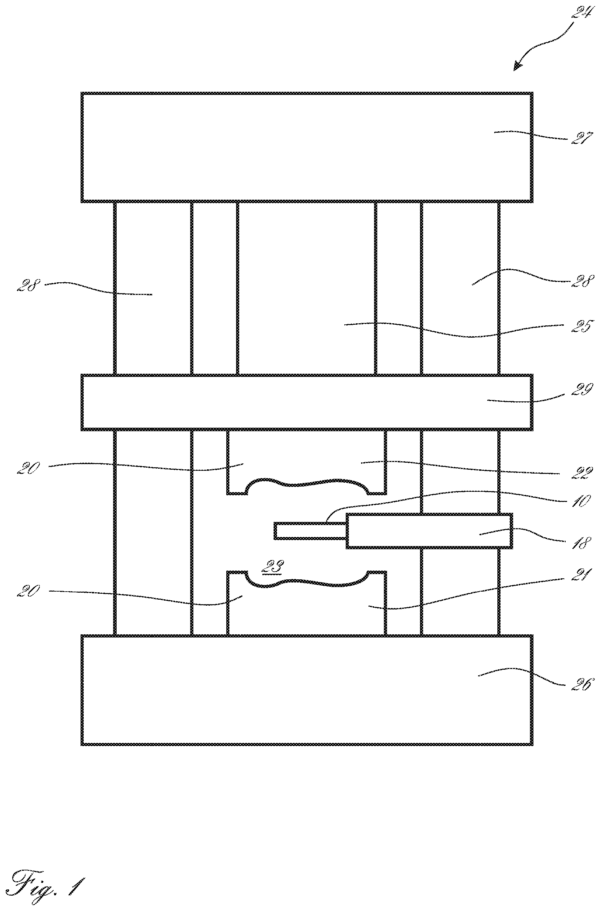

Die in Figur 1 schematisch dargestellte Umformmaschine 24 ist als Gesenkschmiedepresse ausgestaltet und umfasst zwei Gesenke 20, ein Untergesenk 21 und ein Obergesenk 22, die mittels eines Presszylinders 25 aufeinander zu und voneinander weg bewegt werden können.

Hierzu umfasst die Umformmaschine ein Unterjoch 26 und ein Oberjoch 27, welche über Zuganker 28 voneinander beabstandet sind, wobei die Zuganker 28 den Presskräften, welche der Presszylinder 25 aufbringt, entgegenwirken können.

An den Zugankern 28 ist ein bewegliches Joch 29 geführt, welches von dem Presszylinder zum Pressen entsprechend bewegt werden kann und an welchem das Obergesenk 22 befestigt ist, sodass das Obergesenk 22 mit jedem Arbeitshub auf das Untergesenk 21, welches an dem Unterjoch 26 angeordnet ist, pressend abgesenkt werden kann.

Wie unmittelbar ersichtlich, ergibt sich dann zwischen zwei Arbeitshüben zwischen Unter- und Obergesenk 21, 22 ein Arbeitsraum 23.

Je nach konkreter Ausgestaltung muss, was an sich bekannt ist, das Werkzeug insbesondere wenn Werkstücke auf sich stetig wiederholende Weise gefertigt werden, geschmiert und/oder ausgeblasen werden, um eine ordnungsgemäße Funktion zu gewährleistet. Dieses gilt auch für die Gesenke 20.

Hierzu umfasst die Umformmaschinen einen Sprühkopf 10, welcher über einen Sprüharm 18 in den Arbeitsraum 23 einführbar ist.

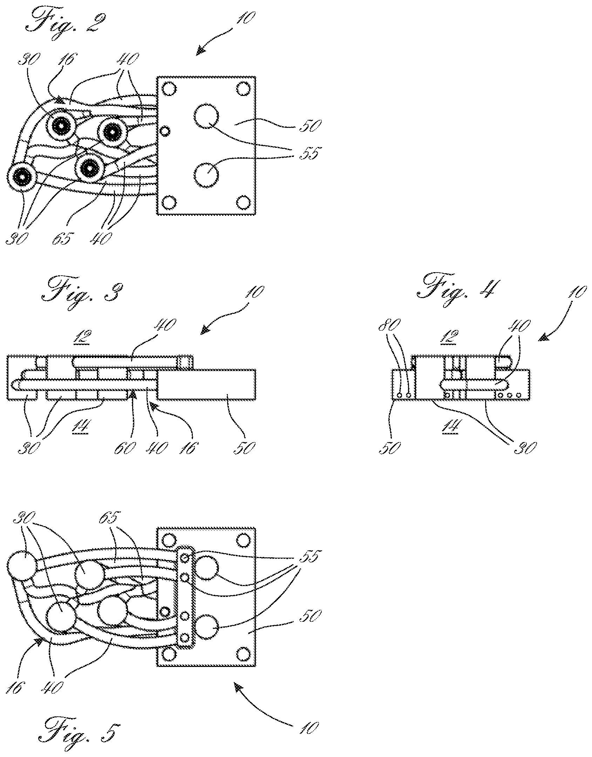

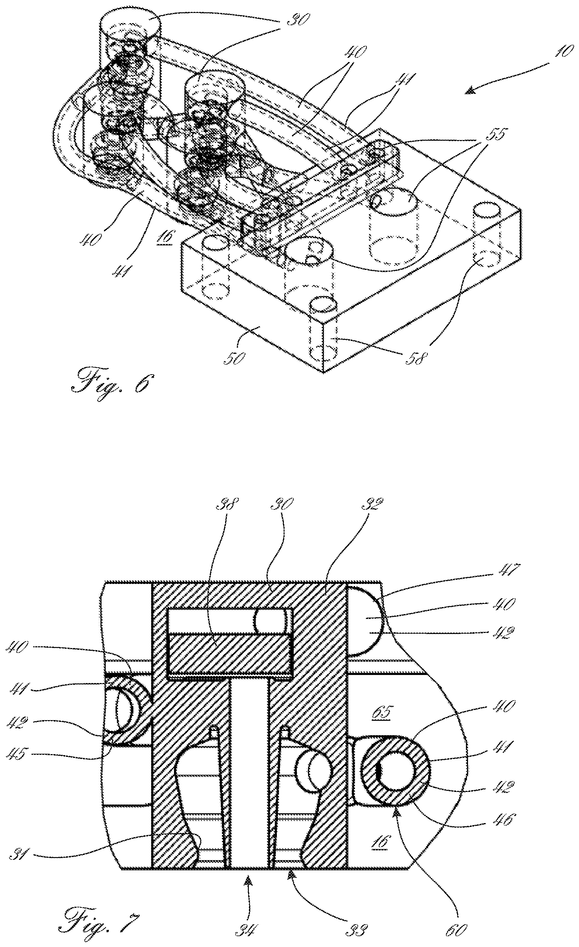

Wie in den Figuren 2 bis 7 erläutert, weist der Sprühkopf mehrere Zweistoffdüsen 30 auf, die - bei diesem Ausführungsbeispiel - eine Lavaldüse 31 umfassen, wie insbesondere in Figur 7 dargestellt. Es versteht sich, dass, je nach konkreten Erfordernissen, in abweichenden Abführungsformen auch andere Düsenarten vorgesehen sein können.

Jede dieser Zweistoffdüsen 30 ist bei diesem Ausführungsbeispiel über drei Zuführkanale 40 mit einem Sprühkopffuß 50 verbunden, welcher Versorgungsanschlüsse 55 aufweist, die ihrerseits mit den Zuführkanälen 40 verbunden sind und diese mit einem Steuerfluid, mit Sprühmittel bzw. mit Sprühluft versorgen können.

So weist jeder Zuführkanal 40 eine Kanalwandung 41 auf, die bei diesem Ausführungsbeispiel als Rohr 42 ausgestaltet ist, wobei in anderen Ausführungsformen andere Rohrquerschnitte bzw. Kanalquerschnitte gewählt werden können. Es versteht sich, dass besonders nah nebeneinander liegende Rohre auch einstückig bzw. mit einer gemeinsamen Wandung ausgestaltet sein können.

Wie insbesondere der Figur 7 entnehmbar, ist die Zweistoffdüse 30 unmittelbar mit einem Sprühmittelkanal 45, einem Sprühluftkanal 46 und einem Steuerkanal 47 als Zuführkanäle 40 verbunden, welche bei diesem Ausführungsbeispiel auch die entsprechende Zweistoffdüse 30 tragen. In einer abweichenden Ausführungsbeispiel kann beispielsweise auch ein Sprühmittelableitkanal vorgesehen sein, sodass das Sprühmittel in einem Kreislauf an der Zweistoffdüse 30 vorbei geführt werden kann, um Entmischungsprozesse zu vermeiden und gleichwohl das Sprühmittel über den Sprühmittelkanal 45 der Zweistoffdüse 30 zur Verfügung zu stellen.

Die Zweistoffdüse 30 selbst umfasst einen Düsenkörper 32, der einerseits einen Sprühluftausgang 33 und andererseits einen Sprühmittelausgang 34 aufweist. Hierbei ist der Sprühluftausgang 33 als Lavaldüse 31 ausgebildet, sodass die äußerst hohen Geschwindigkeiten an Sprühluft erzielt werden können sowie die durch die Lavaldüse 31 bedingten extremen Verwirbelungen das Sprühmittel äußerst fein zerstäuben.

Die Zweistoffdüsen 30 des vorliegenden Ausführungsbeispiel weisen jeweils einen Ventildeckel 38 auf, der, wie aus Figur 7 ersichtlich, den Sprühmittelausgang 34 verschließt, wenn über den Steuerkanal 47 Steuerfluid, bei diesem Ausführungsbeispiel bietet sich hierfür insbesondere Pressluft an, in ausreichendem Druck bereitgestellt. Wird der Ventildeckel 38 entlastet, so hebt das Sprühmittel aus dem Sprühmittelkanal 45 den Ventildeckel 38 gegen den Druck, der in dem Steuerkanal 47 befindlich ist, an, sodass der Ventildeckel 38 öffnet und Sprühmittel durch den Sprühmittelausgang 34 die Zweistoffdüse verlassen kann.

Auf diese Weise kann eine äußerst individuelle Dosierung an Sprühmittel und an Sprühluft erfolgen, da jede Zweistoffdüse 30 individuell angesteuert werden kann, was insbesondere über die Steuerkanäle 47 und die separaten Sprühluftkanäle 46 umgesetzt sein kann.

Bei diesem Ausführungsbeispielen sind die Sprühmittelkanäle 45 zusammen geführt, da es letztlich keine Rolle spielt, ob die entsprechenden Zuführkanäle 40 einzeln oder als Kanalbaum vorliegen. Durch die Ventildeckel 38 ist eine entsprechende individuelle Ansteuerung möglich.

Wie unmittelbar anhand der in Figur 7 erkennbaren Konstruktion ersichtlich, kann die entsprechende Zweistoffdüse 30 sowohl nach unten als auch nach oben gerichtet werden. Ebenso sind andere Neigungswinkel ohne weiteres möglich. Dementsprechend kann das Sprühbild des Sprühkopfs 10 sehr individuell gewählt werden, wobei dieses noch durch die individuelle Ansteuerbarkeit der Zweistoffdüsen 30 verstärkt wird.

Der Sprühkopffuß 50 weist des Weiteren Bohrungen 58 auf, mittels derer er von dem Sprüharm 18 gehalten bzw. an dem Sprüharm 18 befestigt werden kann.

Der Sprühkopf 10 weist eine Oberseite 12 und eine Unterseite 14 auf, wobei bei dem vorliegenden Ausführungsbeispiel sämtliche Zweistoffdüsen 30 nach unten gerichtet sind. Es versteht sich, dass diesbezüglich, wie bereits vorstehend erläutert, große Freiheiten bestehen und eine oder mehrere, ggf. auch alle, Zweistoffdüsen 30 nach oben oder auch seitlich gerichtet sein können.

Durch die an sich sehr offene Konstruktion des Sprühkopfs 10 bilden sich in Bereichen 16 neben den Zweistoffdüsen 30 Tropfflussöffnungen 65, durch welche etwaige Flüssigkeiten ohne weiteres von der Oberseite 12 zur Unterseite 14 des Sprühkopfs 10 gelangen.

Darüber hinaus bilden sich an den Unterseiten der Kanalwandungen 41 bzw. der Zuführkanäle 40 jeweils Tropfstellen 60, an denen etwaige Flüssigkeiten sich gezielt ansammeln und abtropfen können. Dieses hat insbesondere den großen Vorteil, dass eine Ansammlung sehr großer Tropfen, wie dieses an Unterseiten von planen Oberflächen entstehen kann, möglichst vermieden wird.

Am Sprühkopffuß 50 sind des weiteren Nebeldüsen 80 (siehe Figur 4) angeordnet, welche die Zuführkanäle 40 sowie die Zweistoffdüsen 30 mit einem Nebel aus Wasser besprühen können, dieses gilt Kühlungszwecken, insbesondere im Falle von Ausfällen, wobei eine entsprechende Kühlung ggf. auch im Normalbetrieb vorgesehen sein kann.

Wie unmittelbar nachvollziehbar, ist es möglich, die jeweiligen Rohre 42 mit entsprechenden Öffnungen in den Düsenkörpern 32 zu verbinden, um die Rohre 42 anschließend in den Sprühkopffuß 50 einzusetzen und dort ebenfalls zu verbinden, sodass der Sprühkopf 10 auf herkömmliche Weise ohne weiteres bereit zu stellen ist.

Je nach konkreter Art dieser Verbindung sind an den Verbindungsstellen möglicherweise Dichtungen vorzusehen, was jedoch vermieden werden kann, wenn diese Verbindungen von vorne rein entsprechend dicht ausgebildet werden können, beispielsweise durch Verschweißen oder Verlöten. Letzteres ist lediglich dann möglich, wenn die Betriebstemperaturen auch in Störfällen ausreichend niedrig gehalten werden, wozu ggf. die Nebeldüsen 80 dienen können

Besonders bevorzugt sind jedoch die Zweistoffdüsen 30, die Zuführkanäle 40 und der Sprühkopffuß 50 einstückig ausgebildet und durch ein 3D-Druck hergestellt. Dieser 3D-Druck druckt vorzugsweise ein Metall, was den großen Belastungen, die in der Umformmaschine 24 nicht nur in thermischer Hinsicht auf den Sprühkopf 10 einwirken, in der Regel besser Stand halten kann, als andere Materialien. Gegebenenfalls kann jedoch beispielsweise auch Kunststoff verwendet werden, insbesondere wenn die Temperaturen geringer gehalten werden können, wozu ggf. auch eine geeignete Kühlung, beispielsweise durch die Nebeldüsen 80, erfolgen kann.

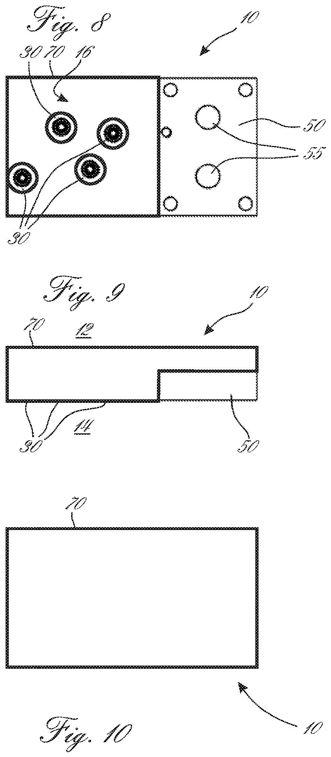

Wie unmittelbar ersichtlich, kann der Sprühkopf 10 ohne weiteres derart ausgestaltet sein, dass die Zuführkanäle 40 die Zweistoffdüsen 30 tragen. Die Stabilität der Gesamtanordnung lässt sich erhöhen, wenn ergänzend ein Gehäuse 70 vorgesehen ist, welches stabilisierend wirken kann und wie dieses in Figuren 8 bis 10 exemplarisch dargestellt ist.

Ein derartiges glattes Gehäuse 70 hat dann den Nachteil, dass sich möglicherweise auf der Oberseite 12 aber auch an der Unterseite 14 größere Flüssigkeitsanlagerungen bilden können, was dann bei einer derartigen Ausgestaltungen in Kauf genommen wird. Andererseits kann durch eine derartige Ausgestaltung naturgemäß das Innere des Gehäuses 70 vor Beeinträchtigungen geschützt werden.

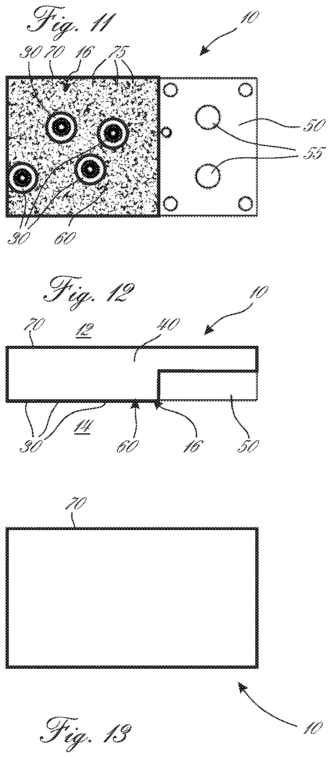

Um Tropfenansammlungen an der Unterseite des Gehäuses 70 zu vermeiden, kann dieses, wie in Figuren 11 bis 13 exemplarisch dargestellt, porös ausgebildet sein. Bei dem in Figuren 11 bis 13 dargestellten Ausführungsbeispielen weist lediglich die Unterseite des Gehäuses 70 Poren 75 auf, die jedoch die Gehäusewandung des Gehäuses 70 nicht durchdringen.

Die Porenränder bilden hierbei Tropfstellen 60, sodass größere Flüssigkeitsansammlungen an der Unterseite 14 des Sprühkopfs 10 wirkungsvoll vermieden werden können.

In einer abweichend ausgestalteten Ausführungsform können die Poren 75 auch die Wandung des Gehäuses 70 durchdringen, sodass letztlich durch die Poren 75 Löcher in der Gehäusewandung bereitgestellt werden.

Durch diese Löcher können etwaige Flüssigkeiten das Innere des Gehäuses 70 verlassen, was insbesondere dann vorteilhaft ist, wenn bei einem derartigen Sprühkopf 10 auch Nebeldüsen vorgesehen sind, die in das Innere des Gehäuses 70 gerichtet sind.

Ebenso versteht es ich, dass auch die Oberseite des Gehäuses 70 Poren aufweisen kann, welche vorzugsweise ebenfalls die Gehäusewandung durchdringen, sodass auf Grund der oberen Poren und der unteren Poren 75 jeweils Tropfflussöffnungen 65 gebildet sind, durch welche Flüssigkeit von der Oberseite 12 des Sprühkopfs 10 zur Unterseite 14 des Sprühkopfs 10 und mithin zu den von den Porenrändern gebildeten Tropfstellen 60 gelangen kann.

Die Poren 75 können hierbei regelmäßig oder unregelmäßig angeordnet sein, was den jeweiligen Erfordernissen bzw. dem jeweiligen Herstellungsverfahren geschuldet sein kann.

Insbesondere können die Poren 75 auch als Waben 76 ausgebildet sein, welche vorzugsweise das gesamte Gehäuse durchdringen. Dieses bedingt eine große Stabilität der Gesamtanordnung, da derartige Waben naturgemäß besonders stabil sind. Darüber hinaus bilden die Waben 76 auch unmittelbar Tropfflussöffnungen 65 und an ihren unteren Rändern Tropfstellen 60, wobei ggf. an Kontaktstellen der Waben 76 mit inneren Strukturen des Sprühkopfe 10, beispielsweise mit dem Zweistoffdüsen 30 oder mit den Zuführkanälen 40, kleine Öffnungen oder Unterbrechungen vorgesehen sein können, damit Flüssigkeit nach wie vor durch die Waben nach unten fließen kann.

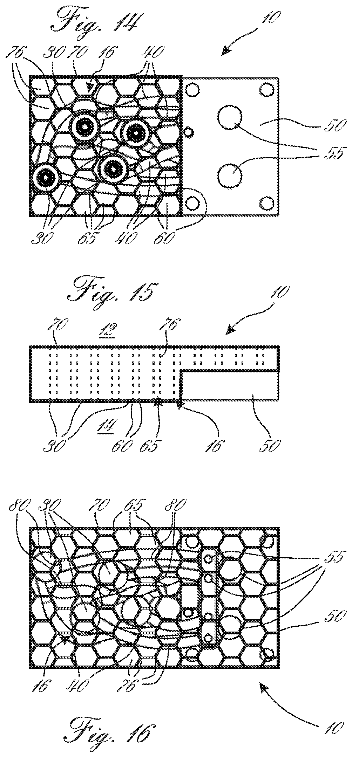

Bei dem in Figuren 14 bis 16 entsprechend beispielhaft dargestellten Ausführungsbeispiel sind die Waben 76 derart stark gewählt, dass im inneren kleine Kanäle vorgesehen sein können, durch welche Wasser zu Nebeldüsen 80 geleitet werden kann, die an den Oberkanten von ausgewählten Waben zu finden sind und durch welche Wasser zum Kühlen der Gesamtanordnung vernebelt werden kann. Hierbei sind die Nebeldüsen bei diesem Ausführungsbeispiel nach oben und zur Seite gerichtet, wobei hier ohne weiteres auch andere Ausrichtungen denkbar sind.

Es versteht sich, dass auch die in Figuren 8 bis 16 dargestellten Ausführungsbeispiele insbesondere über ein 3D-Druckverfahren hergestellt werden können.

### Bezugszeichenliste:

- 10: Sprühkopf
- 12: Oberseite
- 14: Unterseite
- 16: Bereich
- 18: Sprüharm

- 20: Gesenk
- 21: Untergesenk
- 22: Obergesenk
- 23: Arbeitsraum
- 24: Umformmaschine
- 25: Presszylinder
- 26: Unterjoch
- 27: Oberjoch
- 28: Zuganker
- 29: bewegliches Joch

- 30: Zweistoffdüse
- 31: Lavaldüse
- 32: Düsenkörper
- 33: Sprühluftausgang
- 34: Sprühmittelausgang
- 38: Ventildeckel

- 40: Zuführkanal
- 41: Kanalwandung
- 42: Rohr
- 45: Sprühmittelkanal
- 46: Sprühluftkanal
- 47: Steuerkanal

- 50: Sprühkopffuß
- 55: Versorgungsanschluss
- 58: Bohrung

- 60: Tropfstelle
- 65: Tropfflussöffnung

- 70: Gehäuse
- 75: Pore
- 76: Wabe

- 80: Nebeldüse

## Patentansprüche

1. Sprühkopf (10) zur Kühlschmierung mindestens eines Gesenks (20) einer ein Untergesenk (21) und ein Obergesenk (22) aufweisenden Umformmaschine (25), der zwischen zwei Arbeitshüben in einen Arbeitsraum (23) zwischen Unter- und Obergesenk (21, 22) eingebracht werden kann und wenigstens eine Zweistoffdüse (30) trägt, die zur Kühlschmierung ein Gemisch aus Sprühmittel und Sprühluft auf das Gesenk (20) zerstäuben kann und mit wenigstens einem Zuführkanal (40) verbunden ist, über welchen ein Steuerfluid, das Gemisch, Sprühmittel oder Sprühluft jeder Zweistoffdüse (30) zugeführt werden kann und der bis zu einem Sprühkopffuß (50) reicht, der wenigstens einen Versorgungsanschluss (55) trägt, wobei jeder Versorgungsanschluss (55) mit einem Zuführkanal (40) verbunden ist,
**dadurch gekennzeichnet, dass** jede Zweistoffdüse (30) einen Ventildeckel (38) aufweist, dass ein Sprühmittelausgang (34) über den Ventildeckel (38) verschließbar ist, wenn über einen Steuerkanal (47) Steuerfluid in ausreichendem Druck bereitgestellt wird, und dass der Ventildeckel (38) gegen den Druck, der in dem Steuerkanal (47) befindlich ist, mittels des Sprühmittels aus einem Sprühmittelkanal (45) anhebbar ist, wenn der Ventildeckel (38) entlastet wird, sodass der Ventildeckel (38) öffenbar ist und Sprühmittel durch den Sprühmittelausgang (34) die Zweistoffdüse (30) verlassen kann, wobei jede Zweistoffdüse (30) einen einstückig mit einem Gehäuse (70) ausgebildeten Düsenkörper (32) aufweist und bis auf bewegliche Baugruppen einstückig ausgebildet ist, wobei der Düsenkörper (32) jeder Zweistoffdüse (30) und eine Kanalwandung (41) jedes Zuführkanals (40) einstückig miteinander ausgebildet sind und/oder wobei die Kanalwandung (41) jedes Zuführkanals (40) und der Sprühkopffuß (50) einstückig miteinander ausgebildet sind.

2. Sprühkopf (10) nach Anspruch 1, **dadurch gekennzeichnet, dass** sowohl jeder Düsenkörper (32), die Kanalwandung (41) jedes Zuführkanals (40) als auch der Sprühkopffuß (50) einstückig miteinander ausgebildet sind.

3. Sprühkopf (10) nach Anspruch 1 oder 2, **dadurch gekennzeichnet, dass** das Gehäuse (70) einstückig mit der Kanalwandung (41) jedes Zuführkanals (40) und/oder dem Sprühkopffuß (50) ausgebildet ist.

4. Sprühkopf (10) zur Kühlschmierung mindestens eines Gesenks (20) einer ein Untergesenk (21) und ein Obergesenk (22) aufweisenden Umformmaschine (25), der zwischen zwei Arbeitshüben in einen Arbeitsraum (23) zwischen Unter- und Obergesenk (21, 22) eingebracht werden kann und wenigstens eine Zweistoffdüse (30) trägt, die zur Kühlschmierung ein Gemisch aus Sprühmittel und Sprühluft auf das Gesenk (20) zerstäuben kann und mit wenigstens einem Zuführkanal (40) verbunden ist, über welchen ein Steuerfluid, das Gemisch, Sprühmittel oder Sprühluft jeder Zweistoffdüse (30) zugeführt werden kann und der bis zu einem Sprühkopffuß (50) reicht, der wenigstens einen Versorgungsanschluss (55) trägt, wobei jeder Versorgungsanschluss (55) mit einem Zuführkanal (40) verbunden ist,
**dadurch gekennzeichnet, dass** jede Zweistoffdüse (30) einen Ventildeckel (38) aufweist, dass ein Sprühmittelausgang (34) über den Ventildeckel (38) verschließbar ist, wenn über einen Steuerkanal (47) Steuerfluid in ausreichendem Druck bereitgestellt wird, und dass der Ventildeckel (38) gegen den Druck, der in dem Steuerkanal (47) befindlich ist, mittels des Sprühmittels aus einem Sprühmittelkanal (45) anhebbar ist, wenn der Ventildeckel (38) entlastet wird, sodass der Ventildeckel (38) öffenbar ist und Sprühmittel durch den Sprühmittelausgang (34) die Zweistoffdüse (30) verlassen kann, wobei eine Kanalwandung (41) jedes Zuführkanals (40) als Rohr (42) ausgebildet ist.

5. Sprühkopf (10) nach Anspruch 4, **dadurch gekennzeichnet, dass** jedes Rohr (42) eigensteif ausgebildet ist und sich selbst sowie die jeweilige Zweistoffdüse (30) tragen kann.

6. Sprühkopf (10) nach einem der Ansprüche 1 bis 5, **dadurch gekennzeichnet, dass** jede Zweistoffdüse (30) mit mehreren Zuführkanälen (40) verbunden ist.

7. Sprühkopf (10) nach einem der Ansprüche 1 bis 6, **dadurch gekennzeichnet, dass** der Sprühkopf (10) wenigstens zwei jeweils mit wenigstens einem Zuführkanal (40) verbundene Zweistoffdüsen (30) trägt.

8. Sprühkopf (10) nach Anspruch 7, **dadurch gekennzeichnet, dass** zwischen den Zweistoffdüsen (30) und den Zuführkanälen (40) freier Raum ist.

9. Sprühkopf (10) zur Kühlschmierung mindestens eines Gesenks (20) einer ein Untergesenk (21) und ein Obergesenk (22) aufweisenden Umformmaschine (24), der zwischen zwei Arbeitshüben in einen Arbeitsraum (23) zwischen Unter- und Obergesenk (21, 22) eingebracht werden kann und wenigstens eine Zweistoffdüse (30) trägt, die zur Kühlschmierung ein Gemisch aus Sprühmittel und Sprühluft auf das Gesenk (20) zerstäuben kann und mit wenigstens einem Zuführkanal (40) verbunden ist, über welchen ein Steuerfluid, das Gemisch, Sprühmittel oder Sprühluft jeder Zweistoffdüse (30) zugeführt werden kann und der bis zu einem Sprühkopffuß (50) reicht, der wenigstens einen Versorgungsanschluss (55) trägt, wobei jeder Versorgungsanschluss (55) mit einem Zuführkanal (40) verbunden ist,
**dadurch gekennzeichnet, dass** der Sprühkopf (10) ein poröses Gehäuse (70) aufweist.

10. Sprühkopf (10) nach Anspruch 9, **dadurch gekennzeichnet, dass** der Sprühkopf (10) eine Oberseite (12) und eine Unterseite (14) aufweist und die Poren (75) des Gehäuses (70) sich an der Oberseite (12) und/oder an der Unterseite (14) öffnen.

11. Sprühkopf (10) nach Anspruch 9 oder 10, **dadurch gekennzeichnet, dass** die Poren (75) regelmäßig angeordnet sind.

12. Sprühkopf (10) nach einem der Ansprüche 9 bis 11, **dadurch gekennzeichnet, dass** die Poren (75) Waben (76) umfassen.

13. Sprühkopf (10) nach einem der Ansprüche 9 bis 12, **dadurch gekennzeichnet, dass** wenigstens eine der Poren (75), vorzugsweise wenigstens einige der Poren (75), das Gehäuse (70) von Oberseite (12) zur Unterseite (14) durchdringen.

14. Sprühkopf (10) nach einem der vorstehenden Ansprüche, **dadurch gekennzeichnet, dass** die Zweistoffdüse oder wenigstens eine der Zweistoffdüsen (30) eine Lavaldüse (31) umfasst.

15. Sprühkopf (10) nach Anspruch 14, **dadurch gekennzeichnet, dass** die Zweistoffdüse (30) oder wenigstens eine der Zweistoffdüsen (30) einen Sprühluftausgang (33) aufweist, der als Lavaldüse (31) ausgebildet ist.

16. Sprühkopf (10) nach einem der vorstehenden Ansprüche, **dadurch gekennzeichnet, dass** der Sprühkopf (10) eine Oberseite (12) und eine Unterseite (14) aufweist und an der Unterseite (14) in wenigstens einem Bereich (16) neben jeder Zweistoffdüse (30) Tropfstellen (60) vorgesehen sind.

17. Sprühkopf (10) nach Anspruch 16, **dadurch gekennzeichnet, dass** von der Oberseite (12) zu der Unterseite (14) durch den Sprühkopf (10) Tropfflussöffnungen (65) reichen.

18. Sprühkopf (10) nach Anspruch 17, **dadurch gekennzeichnet, dass** die Tropfflussöffnungen (65) an den Tropfstellen (60) enden.

19. Sprühkopf (10)nach einem der vorstehenden Ansprüche, **dadurch gekennzeichnet, dass** der Sprühkopf (10) ergänzend zu der Zweistoffdüse (30) oder ergänzend zu den Zweistoffdüsen (30) wenigstens eine Nebeldüse (80) trägt.

20. Sprühkopf (10) nach Anspruch 19, **dadurch gekennzeichnet, dass** jede Nebeldüse (80) auf Baugruppen des Sprühkopfs (10), wie beispielsweise auf den Düsenkörper (32) einer der Zweistoffdüsen (30), auf die Kanalwandung (41) eines der Zuführkanäle (40), auf den Sprühkopffuß (50) und/oder auf das oder ein Gehäuse (70), oder nach oben gerichtet ist.

21. Sprühkopf (10) nach Anspruch 19 oder 20, **dadurch gekennzeichnet, dass** die Nebeldüse (80) Wasser vernebelt.

22. Verfahren zur Herstellung eines Sprühkopfs (10) zur Kühlschmierung mindestens eines Gesenks (20) einer ein Untergesenk (21) und ein Obergesenk (22) aufweisenden Umformmaschine (25), der zwischen zwei Arbeitshüben in einen Arbeitsraum (23) zwischen Unter- und Obergesenk (21, 22) eingebracht werden kann und wenigstens eine Zweistoffdüse (30) trägt, die zur Kühlschmierung ein Gemisch aus Sprühmittel und Sprühluft auf das Gesenk (20) zerstäuben kann und mit wenigstens einem Zuführkanal (40) verbunden ist, über welchen ein Steuerfluid, das Gemisch, Sprühmittel oder Sprühluft jeder Zweistoffdüse (30) zugeführt werden kann und der bis zu einem Sprühkopffuß (50) reicht, der wenigstens einen Versorgungsanschluss (55) trägt, wobei jeder Versorgungsanschluss (55) mit einem Zuführkanal (40) verbunden ist, **dadurch gekennzeichnet, dass** jede Zweistoffdüse (30) einen Ventildeckel (38) aufweist, der einen Sprühmittelausgang (34) verschließt, wenn über einen Steuerkanal (47) Steuerfluid in ausreichendem Druck bereitgestellt wird und wobei das Sprühmittel aus einem Sprühmittelkanal (45) den Ventildeckel (38) gegen den Druck, der in dem Steuerkanal (47) befindlich ist, anhebt, wenn der Ventildeckel (38) entlastet wird, sodass der Ventildeckel (38) öffnet und Sprühmittel durch den Sprühmittelausgang (34) die Zweistoffdüse (30) verlassen kann, wobei Baugruppen des Sprühkopfs (10) mittels 3D-Druck hergestellt werden.

23. Herstellungsverfahren nach Anspruch 22, **dadurch gekennzeichnet, dass** der 3D-Druck metallisch druckt.

## Claims

1. A spray head (10) for supplying at least one die (20) of a forming machine (25) comprising a lower die (21) and an upper die (22) with lubricating coolant, which spray head can be introduced between two working strokes into a working chamber (23) between the lower and upper die (21, 22) and carries at least one two-substance nozzle (30), which can atomise a mixture of spray medium and spray air onto the die (20) for the supply of lubricating coolant and is connected to at least one feed channel (40), via which a control fluid, the mixture, spray medium or spray air can be fed to each two-substance nozzle (30) and which reaches up to a spray head foot (50), which carries at least one supply connection (55), wherein each supply connection (55) is connected to a feed channel (40), **characterised in that** each two-substance nozzle (30) comprises a valve cover (38), that a spray medium outlet (34) can be closed by means of the valve cover (38) when control fluid with a sufficient pressure is provided via a control channel (47), and that the valve cover (38) can be raised against the pressure, which is present in the control channel (47), by means of the spray medium from the spray medium channel (45), when the valve cover (38) is relieved of pressure, so that the valve cover (38) can be opened and spray medium can leave the two-substance nozzle (30) through the spray medium outlet (34), wherein each two-substance nozzle (30) comprises a nozzle body (32) formed in one piece with a housing (70) and is formed in one piece apart from mobile modules, wherein the nozzle body (32) of each two-substance nozzle (30) and a channel wall (41) of each feed channel (40) are formed in one piece with one another and/or wherein the channel wall (41) of each feed channel (40) and the spray head foot (50) are formed in one piece with one another.

2. The spray head (10) according to claim 1, **characterised in that** each nozzle body (32), the channel wall (41) of each feed channel (40) and also the spray head foot (50) are formed in one piece with one another.

3. The spray head (10) according to claim 1 or 2, **characterised in that** the housing (70) is formed in one piece with the channel wall (41) of each feed channel (40) and/or the spray head foot (50).

4. A spray head (10) for supplying at least one die (20) of a forming machine (25) comprising a lower die (21) and an upper die (22) with lubricating coolant, which spray head can be introduced between two working strokes into a working chamber (23) between the lower and upper die (21, 22) and carries at least one two-substance nozzle (30), which can atomise a mixture of spray medium and spray air onto the die (20) for the supply of lubricating coolant and is connected to at least one feed channel (40), via which a control fluid, the mixture, spray medium or spray air can be fed to each two-substance nozzle (30) and which reaches up to a spray head foot (50), which carries at least one supply connection (55), wherein each supply connection (55) is connected to a feed channel (40), **characterised in that** each two-substance nozzle (30) comprises a valve cover (38), that a spray medium outlet (34) can be closed by means of the valve cover (38) when control fluid with a sufficient pressure is provided via a control channel (47), and that the valve cover (38) can be raised against the pressure, which is present in the control channel (47), by means of the spray medium from the spray medium channel (45), when the valve cover (38) is relieved of pressure, so that the valve cover (38) can be opened and spray medium can leave the two-substance nozzle (30) through the spray medium outlet (34), wherein the channel wall (41) of each feed channel (40) is designed as a tube (42).

5. The spray head (10) according to claim 4, **characterised in that** each tube (42) is designed inherently rigid and can carry itself and the two-substance nozzle (30).

6. The spray head (10) according to any one of claims 1 to 5, **characterised in that** each two-substance nozzle (30) is connected to a plurality of feed channels (40) .

7. The spray head (10) according to any one of claims 1 to 6, **characterised in that** the spray head (10) carries at least two two-substance nozzles (30) in each case connected to at least one feed channel (40).

8. The spray head (10) according to claim 7, **characterised in that** there is free space between the two-substance nozzles (30) and the feed channels (40).

9. The spray head (10) for supplying at least one die (20) of a forming machine (24) comprising a lower die (21) and an upper die (22) with lubricating coolant, which can be introduced between two working strokes into a working chamber (23) between the lower and upper die (21, 22) and carries at least one two-substance nozzle (30), which can atomise a mixture of spray medium and spray air onto the die (20) for the supply of lubricating coolant and is connected to at least one feed channel (40), via which a control fluid, the mixture, spray medium or spray air can be fed to each two-substance nozzle (30) and which reaches up to a spray head foot (50), which carries at least one supply connection (55), wherein each supply connection (55) is connected to a feed channel (40), **characterised in that** the spray head (10) comprises a porous housing (70).

10. The spray head (10) according to claim 9, **characterised in that** the spray head (10) comprises an upper side (12) and a lower side (14) and the pores (75) of the housing (70) open at the upper side (12) and/or at the lower side (14).

11. The spray head (10) according to claim 9 or 10, **characterised in that** the pores (75) are arranged in a regular manner.

12. The spray head (10) according to any one of claims 9 to 11, **characterised in that** the pores (75) comprise honeycombs (76).

13. The spray head (10) according to any one of claims 9 to 12, **characterised in that** at least one of the pores (75), preferably at least several of the pores (75), penetrate the housing (70) from the upper side (12) to the lower side (14).

14. The spray head (10) according to any one of the preceding claims, **characterised in that** the two-substance nozzle or at least one of the two-substance nozzles (30) is a Laval nozzle (31).

15. The spray head (10) according to claim 14, **characterised in that** the two-substance nozzle (30) or at least one of the two-substance nozzles (30) comprises a spray-air outlet (33) which is designed as a Laval nozzle (31).

16. The spray head (10) according to any one of the preceding claims, **characterised in that** the spray head (10) comprises an upper side (12) and a lower side (14) and drip points (60) are provided at the lower side (14) in at least one region (16) beside each two-substance nozzle (30).

17. The spray head (10) according to claim 16, **characterised in that** drip flow openings (65) extend from the upper side (12) to the lower side (14) through the spray head (10).

18. The spray head (10) according to claim 17, **characterised in that** the drip flow openings (65) end at the drip points (60).

19. The spray head (10) according to any one of the preceding claims, **characterised in that** the spray head (10) carries at least one mist nozzle (80) in addition to the two-substance nozzle (30) or in addition to the two-substance nozzles (30).

20. The spray head (10) according to claim 19, **characterised in that** each mist nozzle (80) is directed onto modules of the spray head (10), for example onto the nozzle body (32) of one of the two-substance nozzles (30), onto the channel wall (41) of one of the feed channels (40), onto the spray head foot (50) and/or onto the or a housing (70), or upwards.

21. The spray head (10) according to claim 19 or 20, **characterised in that** the mist nozzle (80) atomises water.

22. A method for the production of a spray head (10) for supplying at least one die (20) of a forming machine (25) comprising a lower die (21) and an upper die (22) with lubricating coolant, which spray head can be introduced between two working strokes into a working chamber (23) between the lower and upper die (21, 22) and carries at least one two-substance nozzle (30), which can atomise a mixture of spray medium and spray air onto the die (20) for the supply of lubricating coolant and is connected to at least one feed channel (40), via which a control fluid, the mixture, spray medium or spray air can be fed to each two-substance nozzle (30) and which reaches up to a spray head foot (50), which carries at least one supply connection (55), wherein each supply connection (55) is connected to a feed channel (40),
**characterised in that** each two-substance nozzle (30) comprises a valve cover (38), which closes a spray medium outlet (34) when control fluid with a sufficient pressure is provided via a control channel (47), and wherein the spray medium from a spray medium channel (45) raises the valve cover (38) against the pressure, which is present in the control channel (47), when the valve cover (38) is relieved of pressure, so that the valve cover (38) opens and spray medium can leave the two-substance nozzle (30) through the spray medium outlet (34), wherein modules of the spray head (10) of produced by 3D-printing.

23. The production method according to claim 22, **characterised in that** the 3D-printing employs metallic printing.

## Revendications

1. Tête de pulvérisation (10) pour la lubrification de refroidissement d'au moins une matrice (20) d'une machine de formage (25) comportant une matrice inférieure (21) et une matrice supérieure (22), qui peut être montée entre deux courses de travail dans un espace de travail (23) entre la matrice inférieure et la matrice supérieure (21, 22) et porte au moins une buse à deux composants (30), qui peut pulvériser pour la lubrification de refroidissement, un mélange d'agent de pulvérisation et d'air de pulvérisation sur la matrice (20) et est reliée à au moins un canal d'alimentation (40) par lequel un fluide de commande, le mélange, agent de pulvérisation ou air de pulvérisation peut être amené à chaque buse à deux composants (30) et qui s'étend jusqu'à une base de tête de pulvérisation (50), qui porte au moins un raccord d'alimentation (55), sachant que chaque raccord d'alimentation (55) est relié à un canal d'alimentation (40),
**caractérisée en ce que** chaque buse à deux composants (30) comporte un couvercle de soupape (38), **en ce qu'**une sortie d'agent de pulvérisation (34) peut être fermée par le couvercle de soupape (38), lorsque du fluide de commande en pression suffisante est fourni par un conduit de commande (47) et **en ce que** le couvercle de soupape (38) peut être soulevé contre la pression, qui se trouve dans le conduit de commande (47), au moyen de l'agent de pulvérisation d'un canal d'agent de pulvérisation (45), lorsque le couvercle de soupape (38) est soulagé de telle manière que le couvercle de soupape (38) peut être ouvert et l'agent de pulvérisation peut quitter la buse à deux composants (30) par la sortie d'agent de pulvérisation (34), sachant que chaque buse à deux composants (30) comporte un corps de buse (32) constitué monobloc avec un boîtier (70) et est constitué monobloc jusque sur les ensembles mobiles, sachant que le corps de buse (32) de chaque buse à deux composants (30) et une paroi de canal (41) de chaque canal d'alimentation (40) sont constitués monobloc l'un avec l'autre et/ou sachant que la paroi de canal (41) de chaque canal d'alimentation (40) et la base de tête de pulvérisation (50) sont constitués monobloc l'un avec l'autre.

2. Tête de pulvérisation (10) selon la revendication 1, **caractérisée en ce que** tant chaque corps de buse (32), que la paroi de canal (41) de chaque canal d'alimentation (40) qu'également la base de tête de pulvérisation (50) sont constitués monobloc l'un avec l'autre.

3. Tête de pulvérisation (10) selon la revendication 1 ou 2, **caractérisée en ce que** le boîtier (70) est constitué monobloc avec la paroi de canal (41) de chaque canal d'alimentation (40) et/ou la base de la tête de pulvérisation (50).

4. Tête de pulvérisation (10) pour la lubrification de refroidissement au moins d'une matrice (20) d'une machine de formage (25) comportant une matrice inférieure (21) et une matrice supérieure (22), qui peut être montée entre deux courses de travail dans un espace de travail (23) entre la matrice inférieure et la matrice supérieure (21, 22) et porte au moins une buse à deux composants (30), qui peut pulvériser pour la lubrification de refroidissement un mélange d'agent de pulvérisation et d'air de pulvérisation sur la matrice (20) et est reliée à au moins un canal d'alimentation (40) par lequel un fluide de commande, le mélange, agent de pulvérisation ou air de pulvérisation peut être amené à chaque buse à deux composants (30) et qui s'étend jusqu'à une base de tête de pulvérisation (50), qui porte au moins un raccord d'alimentation (55), sachant que chaque raccord d'alimentation (55) est relié à un canal d'alimentation (40), **caractérisée en ce que** chaque buse à deux composants (30) comporte un couvercle de soupape (38), **en ce qu'**une sortie d'agent de pulvérisation (34) peut être fermée par le couvercle de soupape (38), lorsque du fluide de commande en pression suffisante est fourni par un canal de commande (47) et **en ce que** le couvercle de soupape (38) peut être soulevé contre la pression qui se trouve dans le conduit de commande (47) au moyen de l'agent de pulvérisation d'un canal d'agent de pulvérisation (45), lorsque le couvercle de soupape (38) est soulagé de telle manière que le couvercle de soupape (38) peut être ouvert et l'agent de pulvérisation peut quitter la buse à deux composants (30) par la sortie d'agent de pulvérisation (34), sachant qu'une paroi de canal (41) de chaque canal d'alimentation (40) est constituée comme un tuyau (42).

5. Tête de pulvérisation (10) selon la revendication 4, **caractérisée en ce que** chaque tuyau (42) est constitué intrinsèquement rigide et peut s'auto-porter ainsi que la buse à deux composants (30) respective.

6. Tête de pulvérisation (10) selon l'une quelconque des revendications 1 à 5, **caractérisée en ce que** chaque buse à deux composants (30) est reliée à plusieurs canaux d'alimentation (40).

7. Tête de pulvérisation (10) selon l'une quelconque des revendications 1 à 6, **caractérisée en ce que** la tête de pulvérisation (10) porte au moins deux buses à deux composants (30) reliées respectivement à au moins un canal d'alimentation (40).

8. Tête de pulvérisation (10) selon la revendication 7, **caractérisée en ce qu'**il y a un espace libre entre les buses à deux composants (30) et les canaux d'alimentation (40).

9. Tête de pulvérisation (10) pour la lubrification de refroidissement d'au moins une matrice (20) d'une machine de formage (24) comportant une matrice inférieure (21) et une matrice supérieure (22), qui peut être montée entre deux courses de travail dans un espace de travail (23) entre la matrice inférieure et la matrice supérieure (21, 22) et porte au moins une buse à deux composants (30), qui peut pulvériser pour la lubrification de refroidissement un mélange d'agent de pulvérisation et d'air de pulvérisation sur la matrice (20) et est reliée à au moins un canal d'alimentation (40) par lequel un fluide de commande, le mélange, agent de pulvérisation ou air de pulvérisation peut être amené à chaque buse à deux composants (30) et qui s'étend jusqu'à une base de tête de pulvérisation (50), qui porte au moins un raccord d'alimentation (55), sachant que chaque raccord d'alimentation (55) est relié à un canal d'alimentation (40), **caractérisée en ce que** la tête de pulvérisation (10) comporte un boîtier poreux (70).

10. Tête de pulvérisation (10) selon la revendication 9, **caractérisée en ce que** la tête de pulvérisation (10) comporte un côté supérieur (12) et un côté inférieur (14) et les pores (75) du boîtier (70) s'ouvrent sur le côté supérieur (12) et/ou sur le côté inférieur (14).

11. Tête de pulvérisation (10) selon la revendication 9 ou 10, **caractérisée en ce que** les pores (75) sont disposés de façon régulière.

12. Tête de pulvérisation (10) selon l'une quelconque des revendications 9 à 11, **caractérisée en ce que** les pores (75) comprennent des alvéoles (76).

13. Tête de pulvérisation (10) selon l'une quelconque des revendications 9 à 12, **caractérisée en ce qu'**au moins un des pores (75), de préférence au moins plusieurs des pores (75), traversent le boîtier (70) du côté supérieur (12) au côté inférieur (14).

14. Tête de pulvérisation (10) selon l'une quelconque des revendications précédentes, **caractérisée en ce que** la buse à deux composants ou au moins une des buses à deux composants (30) comprend une tuyère de Laval (31).

15. Tête de pulvérisation (10) selon la revendication 14, **caractérisée en ce que** la buse à deux composants (30) ou une des buses à deux composants (30) comporte une sortie d'air de pulvérisation (33), qui est constituée comme une tuyère de Laval (31).

16. Tête de pulvérisation (10) selon l'une quelconque des revendications précédentes, **caractérisée en ce que** la tête de pulvérisation (10) comporte un côté supérieur (12) et un côté inférieur (14) et des points d'égouttage (60) sont prévus sur le côté inférieur (14) dans au moins une zone (16) près de chaque buse à deux composants (30).

17. Tête de pulvérisation (10) selon la revendication 16, **caractérisée en ce que** des ouvertures d'égouttage (65) s'étendent du côté supérieur (12) au côté inférieur (14) à travers la tête de pulvérisation (10).

18. Tête de pulvérisation (10) selon la revendication 17, **caractérisée en ce que** les ouvertures d'égouttage (65) se terminent aux points d'égouttage (60).

19. Tête de pulvérisation (10) selon l'une quelconque des revendications précédentes, **caractérisée en ce que** la tête de pulvérisation (10) porte au moins une buse de nébulisation (80) en complément de la buse à deux composants (30) ou en complément des buses à deux composants (30).

20. Tête de pulvérisation (10) selon la revendication 19, **caractérisée en ce que** chaque buse de nébulisation (80) est dirigée sur les ensembles de la tête de pulvérisation (10), comme par exemple sur le corps de buse (32) d'une des deux buses à deux composants (30), sur la paroi de canal (41) d'un des canaux d'alimentation (40), sur la base de la tête de pulvérisation (50) et/ou sur le ou un boîtier (70) ou vers le bas.

21. Tête de pulvérisation (10) selon la revendication 19 ou 20, **caractérisée en ce que** la buse de nébulisation (80) nébulise de l'eau.

22. Procédé de fabrication d'une tête de pulvérisation (10) pour la lubrification de refroidissement d'au moins une matrice (20) d'une machine de formage (25) comportant une matrice inférieure (21) et une matrice supérieure (22), qui peut être montée entre deux courses de travail dans un espace de travail (23) entre la matrice inférieure et la matrice supérieure (21, 22) et porte au moins une buse à deux composants (30), qui peut pulvériser pour la lubrification de refroidissement, un mélange d'agent de pulvérisation et d'air de pulvérisation sur la matrice (20) et est reliée à au moins un canal d'alimentation (40) par lequel un fluide de commande, le mélange, agent de pulvérisation ou air de pulvérisation peut être amené à chaque buse à deux composants (30) et qui s'étend jusqu'à une base de tête de pulvérisation (50), qui porte au moins un raccord d'alimentation (55), sachant que chaque raccord d'alimentation (55) est relié à un canal d'alimentation (40),
**caractérisé en ce que** chaque buse à deux composants (30) comporte un couvercle de soupape (38), qui ferme une sortie d'agent de pulvérisation (34), lorsque du fluide de commande est fourni en pression suffisante par un conduit de commande (47) et sachant que l'agent de pulvérisation d'un canal d'agent de pulvérisation (45) soulève le couvercle de soupape (38) contre la pression, qui se trouve dans le conduit de commande (47), lorsque le couvercle de soupape (38) est soulagé de telle manière que le couvercle de soupape (38) s'ouvre et l'agent de pulvérisation peut quitter la buse à deux composants (30) par la sortie d'agent de pulvérisation (34), sachant que les ensembles de la tête de pulvérisation (10) sont fabriqués au moyen de l'impression 3 D.

23. Procédé de fabrication selon la revendication 22, **caractérisé en ce que** l'impression 3 D imprime métalliquement.
